# EUROPÄISCHE PATENTSCHRIFT

(11) **EP 2 194 305 B1**
(45) Veröffentlichungstag und Bekanntmachung des Hinweises auf die Patenterteilung: **09.02.2011**
(21) Anmeldenummer: 08020865.5
(22) Anmeldetag: 02.12.2008
(51) Int. Cl.: F16L 17/06, F16L 47/14, F16L 23/032, F16L 23/16

(54) **Flanschverbindungen für Rohrleitungen**
Flange connections for pipes
Raccords à brides pour tuyaux

(43) Veröffentlichungstag der Anmeldung: 09.06.2010
(73) Patentinhaber: Reinert - Ritz GmbH, 48531 Nordhorn (DE)
(72) Erfinder: Reinert, Karl-Albert, 48527 Nordhorn (DE)
(74) Vertreter: Ostriga, Sonnet, Wirths & Roche

(56) Entgegenhaltungen:
- EP-A- 0 793 049
- EP-A- 1 914 465
- DE-C- 605 339
- FR-A- 1 313 999
- GB-A- 1 205 926
- US-A- 6 123 339

## Beschreibung

Die Erfindung bezieht sich auf Flanschverbindungen nach dem Oberbegriff des Anspruchs 1.

Flanschverbindungen sind die gebräuchlichste lösbare Verbindungsart für Rohrleitungen, Behälter und Apparate. Die Grundform der Flansche hat sich seit ihrer Einführung bis heute kaum verändert. Um an dieser Stelle nicht auf alle Flanscharten eingehen zu wollen, sei zunächst der Los-Flansch mit Vorschweißbund betrachtet, der auch im Kunststoff-Rohrleitungs- und Apparatebau sehr häufig eingesetzt wird.

Eine solche Flanschverbindung setzt sich aus je zwei Vorschweißbunden und Flanschen sowie der Dichtung und den erforderlichen Schraubenbolzen der Flanschverschraubung zusammen. Die gesamte Axialkraft des angeschlossenen Rohrsystems und die sich aus dem im Rohrleitungssystem herrschenden Überdruck ergebenden Kräfte werden von den Schraubenbolzen aufgenommen. Diese übertragen die Kraft auf die Los-Flansche und diese wieder über den Bund auf die Dichtung. Bei insbesondere hohen Innendrücken kann sich der Dichtspalt zwischen den Bunden keilförmig aufweiten, so dass die Dichtwirkung verloren geht, weshalb auch schon vorgeschlagen wurde, teure Spezialdichtungen zu verwenden.

Die Schraubenbolzen werden im Allgemeinen bei Stahlflanschverbindungen auf Vorspannung berechnet und sollen unter Betriebsdruck ein federelastisches Verhalten zeigen. Der Los-Flansch soll unter Belastung nur eine geringe elastische Verformung zeigen. Er soll die von den Schrauben aufgebrachten Kräfte gleichmäßig auf den Vorschweißbund übertragen.

Der Vorschweißbund ist immer aus dem gleichen Werkstoff wie das anzuschließende Rohr oder der Apparat. Er ist mit dem jeweiligen Anschlussstutzen verschweißt und überträgt die von den Flanschen aufgebrachte Kraft auf die Dichtung. Die Dichtung muss jeweils aus einem weicheren Werkstoff als der Vorschweißbund bestehen und soll möglichst ein elastisches Dichtverhalten zeigen.

Im Gegensatz zum Stahl-Vorschweißbund ist es beim thermoplastischen Kunststoff-Vorschweißbund, der unter Druck- und ZugSpannungen ein Fließverhalten zeigt, schwieriger, die vom Flansch aufgebrachten Kräfte gleichförmig über die gesamte Dichtungsbreite auf die Dichtung zu übertragen. Diese Erkenntnis verlangt eine dem Kunststoff in besonderer Weise gerecht werdende Konstruktion.

Aus Gründen der Austauschbarkeit müssen die Hauptabmessungen, wie Außendurchmesser, Lochkreisdurchmesser und Anzahl der Schraubenbohrungen bei Stahl- u. Kunststoff-Flanschverbindungen aufeinander abgestimmt sein. Es wurden Losflansche nach DIN 2673 PN 10 auch für Kunststoff vorgesehen. Da die Maße für PE- und PP-Vorschweißbunde bestimmt werden durch den Außendurchmesser des Rohres, den Flanschansatzdurchmesser, den Außendurchmesser des Bundes und den Innendurchmesser des Rohres bzw. des mit Bund versehenen Rohrstücks, bleibt dem Konstrukteur letztlich nur die Baulänge des Rohrstücks als variable Größe für den konischen Übergang.

Der Vorschweißbund hat aufgrund dieser ungünstigen Geometrie vom Auflagepunkt des Flansches bis zur Dichtungsfläche ein Moment zu übertragen, das im kritischen Bereich zu ungenügender Flächenpressung führen kann. Das in der Leitung befindliche Medium kann zwischen Bund und Dichtung eindringen und wirkt als zusätzliche Kraft, die ein Biegemoment bewirkt, das am Übergang des konischen Teils zum Bund zur Spitzenspannung führt. Da die Spitzenspannung im Bereich des Bundes nicht erwünscht ist, wird es erforderlich, den Vorschweißbund zu verlängern oder den Innendurchmesser des Flansches zu verkleinern.

Die Möglichkeiten, dass sich Spannungsspitzen im Vorschweißbund in der vorbeschriebenen Weise aufbauen, kann auch durch einen zu stark angezogenen Flansch auftreten. Ist eine Flanschverbindung undicht, so neigt man dazu, die Vorspannung der Schrauben zu erhöhen. In den meisten Fällen ist aber schon durch eine zu hohe Vorspannung der Vorschweißbund vorgeschädigt, so dass durch ein weiteres Anziehen der Schrauben die Verbindung zerstört werden kann.

Ähnliche Verhältnisse liegen bei sog. Sonderflanschen vor, die z.B. zum Anschluss einer Rohrleitung an Armatur dienen. Während hierbei armaturenseitig der Armaturenflansch von den Schraubbolzen durchgriffen wird und somit eine Festflansch-Anordnung vorliegt, ist der Rohranschlussbereich mit Vorschweißbund und Losflansch wie oben beschrieben gestaltet und weist dieselbe Problematik auf.

Folglich bezieht sich vorliegende Erfindung auf beide Rohrverbindungstypen.

EP 0 793 049 B1 löst die Aufgabe, eine Flanschverbindung so auszubilden, dass die Verbindung ohne Beeinträchtigung des Kunststoffmaterials der Rohrstücke (Vorschweißbunde) und der Dichtungsfähigkeit sowie ohne Verwendung von Spezialdichtungen sehr hohen Innendrücken zuverlässig standhalten kann, dadurch, dass der Mantel des zylindrischen Rohrabschnitts über eine Kehlnut in die axialweisende Flansch-Anlagefläche übergeht, in welche die Kehlnut eingearbeitet ist und der Flansch mit einer in die Kehlnut eingreifenden Ringwulst versehen ist. Hierdurch ergeben sich radial weiter innen liegende Kontaktflächen bzw. Kraftangriffspunkte zwischen Flansch und Ringbund und die Krafteinleitung in die Verbindung wird wesentlich verbessert. Die Flanschverbindung ist gegen ein keilförmiges Aufspreizen des Dichtspaltes unter Innendruck in hohem Maße resistent und kann erheblich höhere Innendrücke aushalten wie auch Zugkräfte übertragen als herkömmliche Rohrverbindungen. Das oben genannte Dokument offenbart die Merkmale nach dem Oberbegriff von Anspruch 1.

GB 1,205,926 stellt eine Rohrverbindung vor, bei welcher die zwei zu verbindenden Rohrabschnitte neben Aussparungen in den Verbindungsflächen zur Anbringung eines Dichtungsrings zusätzlich Kerben in der Rohrinnenwandung aufweisen, wodurch Dichtlippen gebildet werden, die durch das Eindringen des Mediums in die Kerben unter hohem Druck zusammengepresst werden und die Abdichtung der Rohrverbindung insgesamt verbessert wird. Die hier dargestellte Lösung lässt sich jedoch nicht für Kunststoffrohrleitungen verwenden, da derart breite Kerben in einer Kunststoffrohrinnenwandung zu einer starken Verformung oder auch zum Abbrechen der dadurch entstandenen Dichtlippen führen würden.

DE 605 339 offenbart ebenfalls eine Rohrverbindung, bei welcher durch Herstellen einer Nut hauptsächlich parallel zur Dichtfläche in einem Rohr- oder Gefäßende ein biegsamer Zungenteil herausgearbeitet wird. Um ein Zerstören des biegsamen Zungenteils zu verhindern, kann in die Nut ein mit Öffnungen für den Zutritt des Druckmittels versehenes Zwischenstück eingesetzt werden. Das Herstellen und Einsetzen eines solchen Zwischenstücks ist jedoch mit zusätzlichem Aufwand versehen.

FR 1.313.999 zeigt eine Rohrverbindung, deren Rohrstücke in einer Ausführungsform im Bereich des Ringbundes radiale Aussparungen aufweisen, welche den entsprechenden Rohrabschnitt durch die Ausbildung einer Zunge in der Rohrinnenwandung elastisch werden lassen. Durch die leichte Verformung der Aussparungen wird eine verbesserte Abdichtung zwischen den Rohrstücken gewährleistet. Die Verbindung der Rohrstücke erfolgt durch Einlegen eines Dichtungsrings zwischen die Verbindungsflächen und durch das Einsetzen von Schraubbolzen in dafür vorgesehene Bohrungen in den Rohrstücken. Eine derartige Verbindung eignet sich nicht für Kunststoffrohre.

US 6,123,339 offenbart verschiedene Rohrverbindungen, welche eine Nut oder Kerbe in der axialen Dichtfläche der Rohrstücke aufweisen. Die Rohrstücke werden direkt über Schraubbolzen verbunden, welche durch Bohrungen in den angeformten Flanschstücken geführt werden. Eine derartige Verbindung der Rohrstücke eignet sich nicht für Kunststoffrohrverbindungen.

Gleichwohl besteht im Zuge technischen Fortschritts weiterer Bedarf, Rohrverbindungen auf einfache Weise noch druckresistenter zu gestalten, ein Aspekt, der umso mehr von Bedeutung ist, je größer die vorliegenden Rohrleitungen dimensioniert sind. Dies ist Aufgabe der vorliegenden Erfindung.

Gelöst wird die Aufgabe von einem Gegenstand mit den Merkmalen des Anspruches 1, insbesondere mit den kennzeichnenden Merkmalen, wonach das Rohrstück im Bereich des Ringbundes in seiner Innenwandung einen in Umfangrichtung verlaufenden Radialschlitz aufweist, in welchen das von der Rohrleitung geführte Medium eindringen kann und wonach in der Rohrinnenwandung auf der Umfangslinie des Radialschlitzes wenigstens eine Radialbohrung angeordnet ist.

Diese vorteilhafte Flanschverbindung ermöglicht es, auch sehr hohen Rohrinnendrücken standzuhalten. Auf geschickte Weise wird das unter Druck stehende Medium, welches im Stand der Technik zum problematischen Verformungsverhalten bzw. Fließverhalten des thermoplastischen Kunststoffes führt, zur Erhaltung eines auf die Dichtung zwischen zwei Kunststoffrohren bzw. zwischen Kunststoffrohr und Armatur einliegenden Axialdichtung aufrechtzuerhalten. Das in den Radialschlitz eindringende Medium weitet in genau dem Maße den Radialschlitz auf, in welchem sich die Kunststoffrohrleitung im Bereich der Flanschverbindung verformt. Dies gewährleistet das ordnungsgemäße Aneinanderliegen von Axialdichtung und leitungsseitiger Dichtfläche.

Gemäß dieser vorteilhaften Ausführungsform ist es vorgesehen, dass in die Rohrinnenwandung auf der Umfangslinie des Radialschlitzes wenigstens eine Radialbohrung angeordnet ist. Radialbohrungen auf der Umfangslinie des Radialschlitzes gewährleisten, dass unabhängig von der Schlitzweite das von der Rohrleitung geführte Medium in den Schlitz eindringen kann, um über die Dichtlippe den Druck auf die Axialdichtung aufrecht zu halten.

Bei einer besonders bevorzugten Ausführungsform ist vorgesehen, dass das Rohrstück im Bereich des Ringbundes zwischen der Radialebene der Dichtfläche und Radialschlitz eine Dichtlippe ausbildet, die aus der Radialebene der Dichtfläche ausgestellt ist, insbesondere wenn die Ausstellung der Dichtlippe aus der Radialebene der Dichtfläche des Ringbundes der Weite des Radialschlitzes entspricht. Das hier als Dichtlippe bezeichnete Element ist im Grunde nichts weiter als der zwischen der Radialebene der Dichtfläche des Ringbundes und Radialschlitz verbleibende Materialabschnitt des Rohrstückes. Dieser ringartige Körper ist leicht aus der radialen Dichtfläche des Ringbundes ausgestellt, wodurch eine gewisse Vorspannung erzielbar ist. Wird nun das Rohrstück mit seinem Ringbund gegen eine Armatur oder eine weitere Kunststoffrohrleitung verspannt, wird die Dichtlippe entgegen einer ihr inhärenten Rückstellelastizität in die Radialebene der Dichtfläche des Ringbundes zurückgestellt. Die Rückstellelastizität der Dichtlippe bewirkt einen definierbaren Mindestdruck, der auf die an der Dichtfläche anliegende Axialdichtung der Flanschverbindung ausgeübt wird.

Des weiteren bewirkt die Ausstellung der Dichtlippe um etwa den Betrag der Schlitzweite, dass beim Verspannen der Flansch gegeneinander die Dichtlippe beim Rückstellen in die Radialebene der Dichtfläche rohrstückseitig ein Widerlager findet und die Flächenpressung zwischen einem innenumfänglichen Bereich der Dichtfläche und der Axialdichtung und einem außenumfänglichen Bereich der Dichtfläche und der Axialdichtung identisch ist und der durch das Anziehen der Flansche aufzubringende Flächenpressung besteht. Ein dieser Flächenpressung ausweichendes Rückstellen hinter die Radialebene der Dichtfläche ist nicht möglich.

Außerordentlich bevorzugt ist eine Ausführungsform, die sich dadurch kennzeichnet, dass die Dichtlippe bei gegeneinander verspannten Flanschen in die Radialebene der Dichtfläche des Ringbundes zurückgestellt und der Radialspalt im Bereich der Innenumfangsfläche des Rohrstücks weitestgehend geschlossen ist, das von der Rohrleitung geführte Medium jedoch über die Radialbohrung in den Radialspalt eindringen kann.

Es ist vorgesehen, dass die Tiefe des Radialspaltes in etwa der Stärke des benachbart des Ringbundes befindlichen zylindrischen Rohrabschnitts entspricht, insbesondere wenn die Tiefe der Radialbohrung in etwa der Stärke der benachbart des Ringbundes befindlichen zylindrischen Rohrstücks entspricht.

Alternativ kann vorgesehen sein, dass die Radialbohrung gegenüber dem Radialspalt eine geringere Tiefe aufweist.

Weitere Vorteile der Erfindung ergeben sich aus der nachfolgenden Beschreibung verschiedener Ausführungsbeispiele. Es zeigen:
- Fig. 1: einen Axialschnitt durch einen Teilschnitt einer erfindungsge- mäßen Kunststoff-Rohrleitung,
- Fig. 2: einen Axialschnitt durch eine erfindungsgemäße Flanschverbindung mit Losflansch und Vorschweißbund,
- Fig. 3: einen Axialschnitt der Flanschverbindung gemäß Fig. 1 in druckbelastetem Zustand,
- Fig. 4: einen Axialschnitt durch eine montierte sogenannte Sonder- Flanschverbindung mit einem Losflansch und einem Vor- schweißbund auf der linken und einem Armaturenflansch auf der rechten Seite,
- Fig. 5: die Flanschverbindung gemäß Fig. 4 in druckbelastetem Zustand.

Die in ihrer Gesamtheit mit 10 bezeichnete Flanschverbindung umfasst zwei Rohrstücke 11 und zwei Flansche 12, hier sogenannte Losflansche, sowie eine Anzahl von umfangsverteilt angeordneten Schraubenbolzen 13 für die feste Verspannung der beiden Flansche 12 gegeneinander.

Jedes Rohrstück 11 weist einen zylindrischen Rohrabschnitt 14 und an einem Ende einen damit in einstückig-stoffschlüssiger Verbindung stehenden Ringbund 15 auf. Beim dargestellten Ausführungsbeispiel handelt es sich bei den Rohrstücken um sogenannte Vorschweißbunde, die mit ihren freien Stirnenden 14a an das angrenzende Spitzende 14b von Rohren 14c gleicher Dimension angeschweißt werden.

Mit 16 ist ein Dichtring bezeichnet, für den aufgrund seiner mittigen Anordnung nachfolgend die Bezeichnung "Axialdichtung" oder auch "zentrale Axialdichtung" gewählt wird. Beim dargestellten Ausführungsbeispiel handelt es sich bei der Axialdichtung 16 um eine kreisringförmige Flachdichtung; es sind jedoch auch andere Dichtungen, so insbesondere O-Ringe, denkbar.

Eine Besonderheit besteht bei der dargestellten Ausführungsform entsprechend EP 0 793 049 B1 in der äußeren Form der Rohrstücke 11 und ist darin zu sehen, dass der zylindrische Außenmantel 14b unter Verzicht auf einen sich zum Bund 15 hin im Durchmesser vergrößernden konischen Übergang im Anschluss an eine Kehlnut 18 in die zum Stirnende 14a hin weisende Bundfläche 19 (auch als Flanschanlagefläche bezeichnet) übergeht. Dabei ist die Kehlnut 18 unmittelbar an die Außenmantelfläche 14b angrenzend in diese Bundfläche, die Flanschanlagefläche, 19 eingearbeitet. Der Flansch 12 weist an seinem Innenumfang eine in die Kehlnut 18 - bei lockerer Zuordnung mit geringem Spiel - passende Ringwulst 20 auf und stützt sich mit einer axialweisenden Innenfläche 21 an der Bundfläche 19 als der Flanschanlagefläche möglichst satt ab. Dadurch können die Flansche 12 die Bunde 15 der Rohrkörper 11 auf der vollen radialen Erstreckung der umlaufenden Ringflächen 19 kontaktieren und über die Ringwulst 20 mit möglichst kurzem Abstand von der Längsmittelachse L, nämlich im Bereich des Außendurchmessers des zylindrischen Abschnitts 14 des Rohrstücks 11, Kräfte übertragen. Hierdurch konnte bei der in EP 0 793 049 B1 beschriebenen Rohrverbindung auf einfache Weise vermieden werden, dass bei nennenswerten Innendrücken der Dichtspalt unzuträglich aufgeweitet und dadurch die Dichtung wirkungslos wurde.

Die Flächenpressung zwischen den Dichtflächen 22 und der Axialdichtung 16 wird durch Verspannen der Flansche 12 mittels des Schraubbolzens 13 sichergestellt.

Im Bereich des Ringbundes 15 weist die Innenwandung 23 des Rohrstückes 11 gemäß der vorliegenden Erfindung einen vollumfänglichen Radialschlitz 24 auf. Dieser hat eine Tiefe, die in etwa der Wandungsdicke des sich an den Ringbund 15 anschließenden zylindrischen Rohrabschnittes 14 entspricht. Auf der Umgangslinie des Radialschlitzes sind Radialbohrungen 25 angeordnet, deren Tiefe im vorliegenden Ausführungsbeispiel nicht ganz der Tiefe des Radialschlitzes 24 entspricht. Da die Bohrungen 25 sich auf derselben Umfangslinie wie der Radialschlitz 24 befinden, gewährleisten sie, dass das vom Rohr geführte Medium, unabhängig von der Schlitzweite im Bereich der Innenwandung 23, in den Radialschlitz 24 eindringen kann.

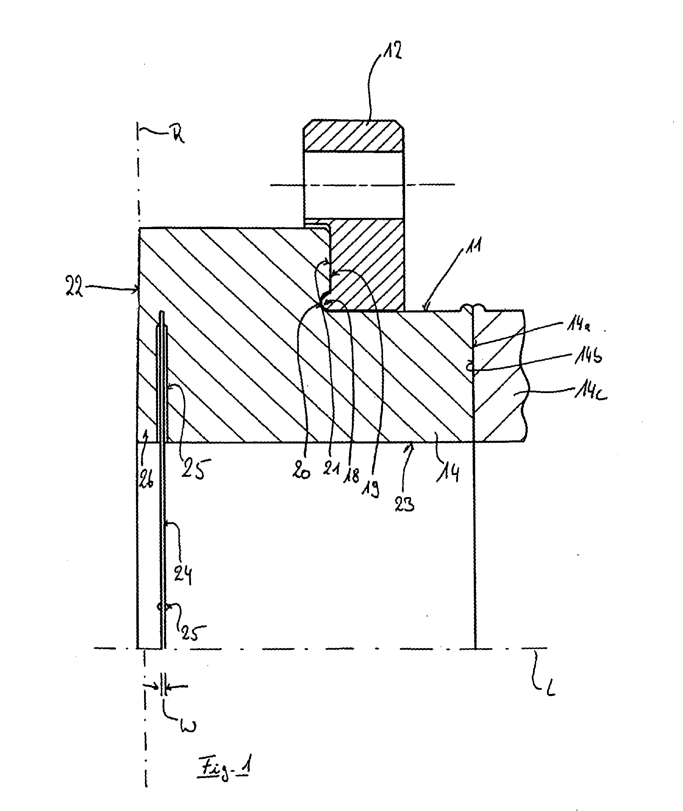

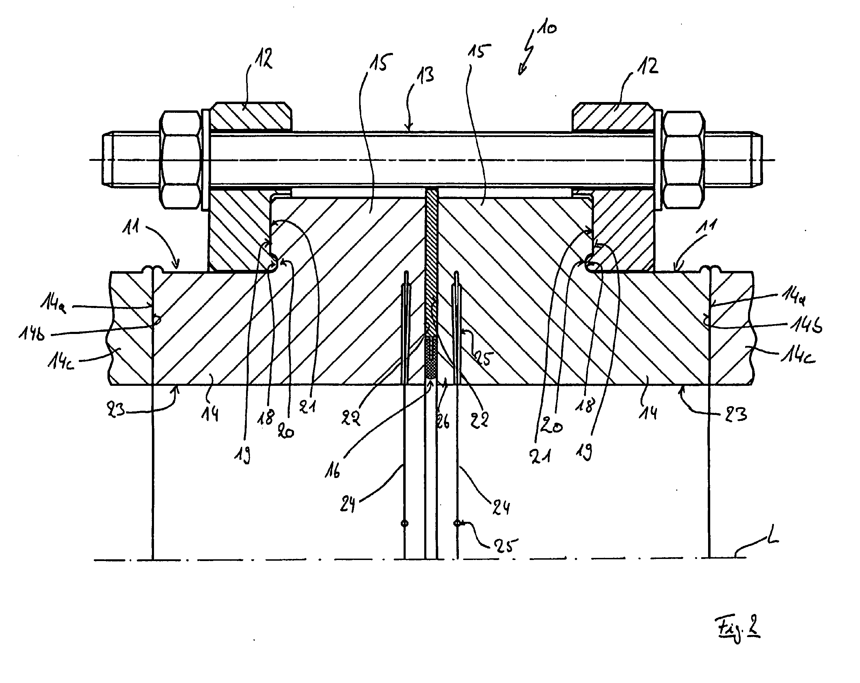

In Fig. 1 ist ein mit Vorschweißbund 15 versehenes Rohr 14c in axialem Halbschnitt vor der Kopplung mit einem Gegenstück dargestellt. Mittels des Einbringens des Radialschlitzes 24 in die Innenwandung 23 des Rohrstücks 14 ist zwischen Radialschlitz 24 und der Radialdichtung der ringbundseitigen Dichtfläche 22 eine umlaufende Dichtlippe 26 gebildet. Diese ist aus der hier strichpunktiert dargestellten Radialebene R der Dichtfläche 22 in Richtung der zwischen den in Fig. 2 dargestellten Rohrstücken 14 angeordneten Axialdichtung 16 ausgestellt. Der Spalt 24 ist in Folge der Ausstellung der Dichtlippe 26 geöffnet und weist eine Spaltweite W auf.

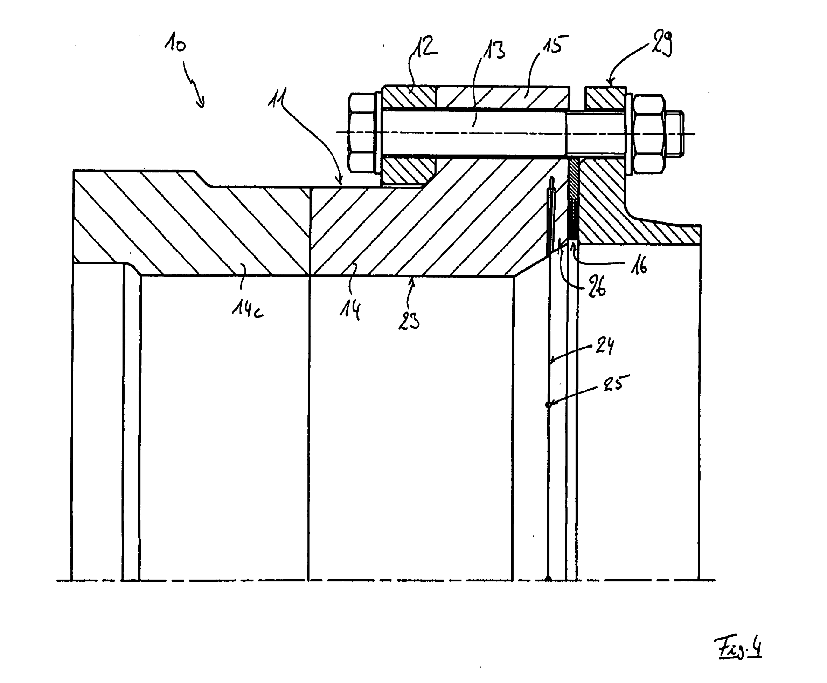

Ist das in Fig. 1 dargestellte Rohrstück 11 mit einem zweiten Rohrstück 11 (Fig. 2) oder aber mit einem Armaturenflansch 29 verspannt (Fig. 4) bewirkt das Anzugsmoment zwischen den Flanschen 12 bzw. 12 und 29 ein Rückstellen der Dichtlippe 26 in die Radialebene R der Dichtfläche 22. Hierdurch schließt sich der Spalt 24 im Bereich der Rohrinnenwandung 23, wobei die der Dichtlippe 26 abgewandte Schlitzwandung als Widerlager dient. Dieses Widerlager verhindert ein Rückstellen der Dichtlippe hinter die Radialebene R. Infolge dessen ist gewährleistet, dass das von den Flanschen auf die Axialdichtung 16 wirkende Anzugsmoment im zum Schlitz 24 benachbarten Dichtflächenbereich mindestens so hoch ist wie im Außenumfangsbereich der Dichtfläche 22. Tatsächlich bewirkt in der vorliegenden Ausführungsform die Rückstellelastizität der Dichtlippe 26 im Bereich des Schlitzes 24 eine Erhöhung des auf die Axialdichtung 16 wirkenden Momentes.

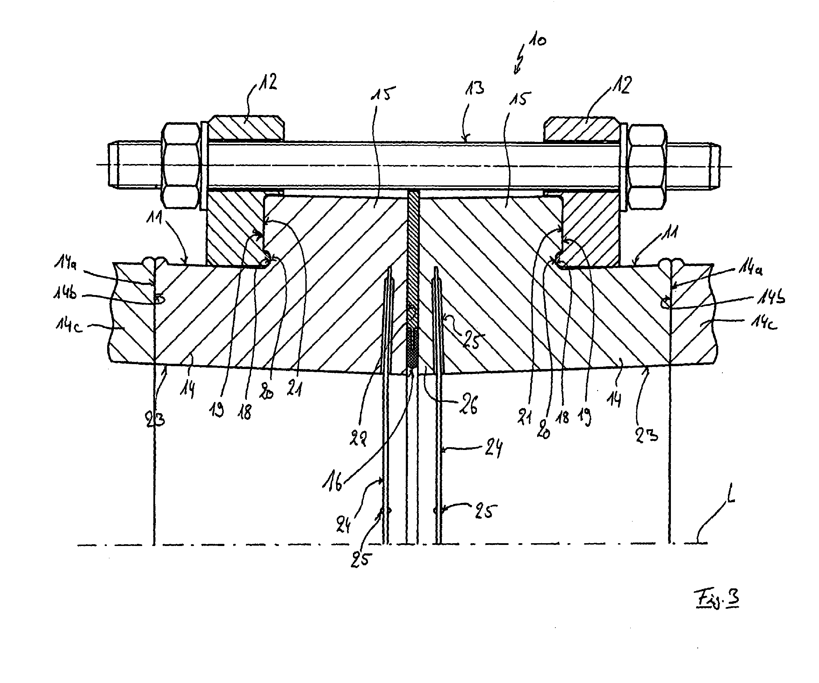

In Fig. 2 ist die Flanschverbindung 10 in drucklosem Zustand dargestellt. Bei Druckbelastung der in Fig. 2 gezeigten Rohrverbindung 10 ergibt sich qualitativ eine Verformung der Vorschweißbunde 15, wie sie - stark übertrieben - in Fig. 3 dargestellt ist. Das Material der Vorschweißbunde 15 gerät unter Einwirkung sehr hoher Drücke innerhalb der Rohrleitung derart zum Fließen, dass sich die mit 24 bezeichneten Schlitze öffnen. Aufgrund der erfindungsgemäßen Anordnung führt nun der in die Schlitze 24 eintretende Druck dazu, die Dichtlippen 26 gegeneinander und folglich gegen die zentrale Axialdichtung 16 pressen, so dass - und zwar mit zunehmendem Druck um so besser - selbsttätig eine hydraulische Dichtung erzielt wird. Die Bohrungen 25 stellen sicher, dass bereits vor der Öffnung der Schlitze 24 das unter Druck stehende Medium in den Schlitz 24 eintreten kann und eine ausreichende Flächenpressung zwischen den Dichtflächen 22 der Ringbunde 15 und der Axialdichtung 16 auch vor der qualitativen Verformung der Vorschweißbunde gewährleistet ist.

Erste Versuche haben die Wirksamkeit dieser erfindungsgemäßen Maßnahme bestätigt. Eine Rohrverbindung nach EP 0 793 049 B1 hielt bei einer Rohrverbindung mit 800mm Ø Nennweite einem Prüfdruck von ca. 15 bar stand. Dem gegenüber wurde die erfindungsgemäße Rohrverbindung bei demselben Nenndurchmesser selbst bei einem Prüfdruck von 21 bar und darüber noch nicht undicht.

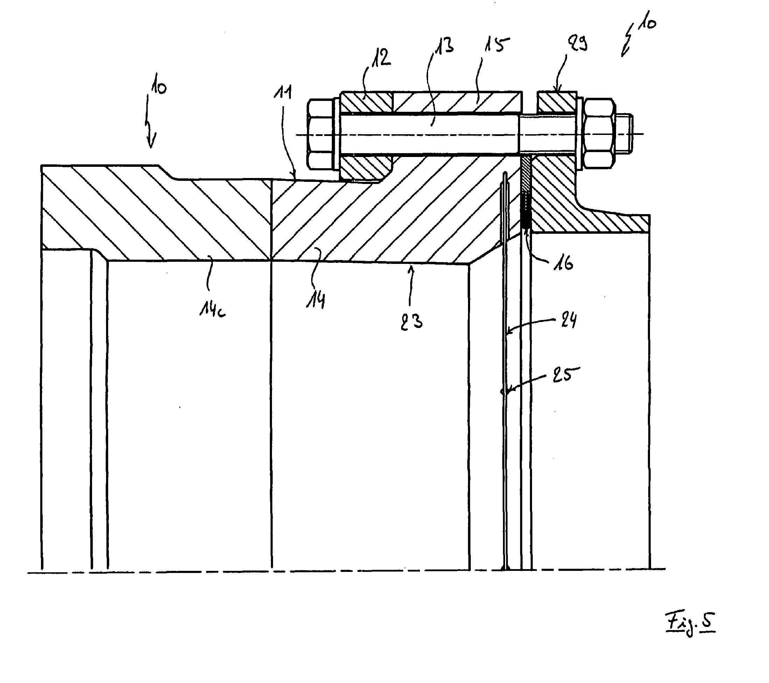

Mit dem Verständnis der in den Fig. 1 bis 3 dargestellten Ausführungsform lässt sich das zweite, in den Fig. 4 und 5 gezeigte Ausführungsbeispiel nun ohne weiteres verstehen.

Im Unterschied zu der erstgenannten Ausführungsform handelt es sich bei der zweiten Ausführung nach den Fig. 4 und 5 um eine Sonderflanschverbindung mit nur einem Vorschweißbund 15 auf der einen (in der Zeichnung linken) Seite und einem Apparate- oder Festflansch 29 auf der anderen (in der Zeichnung rechten) Seite. Gleichwohl öffnet sich unter Belastung des Vorschweißbundes 15 auch hier der Schlitz 24, öffnet sich also gewissermaßen für den Innendruck und presst die Dichtlippe 26 fest gegen die zentrale Axialdichtung 16, auf deren anderer Seite der relativ stabile, z.B. aus Stahlguss bestehende, Festflansch 29 einer Armatur od. dgl. presst, an den die Rohrleitung angeschlossen ist.

Kurz zusammengefasst betrifft die Erfindung Flanschverbindungen für Kunststoff-Rohrleitungen untereinander sowie zur Verbindung einer Kunststoff-Rohrleitung mit einem Armaturenflansch. Im Bereich eines Ringbundes der Kunststoff-Rohrleitung ist in die Innenwandung ein Radialschlitz eingebracht. Bei Verformung des Vorschweißbundes infolge hohen Drucks in der Rohrleitung öffnet sich der Radialschlitz, in den der Druck eintreten kann. Als Folge davon wird die Dichtlippe gegen die zentrale Axialdichtung gepresst. Im Prinzip wird mittels des Radialschlitzes mit zunehmendem Innendruck in der Rohrleitung eine sich selbst verstärkende hydraulische Dichtung geschaffen, die zu einer enormen Druckbelastbarkeit der Rohrverbindung ohne Dichtigkeitsverlust führt.

## Patentansprüche

1. Flanschverbindung (10) für Kunststoffrohrleitungen untereinander oder zur Anbindung einer Kunststoffrohrleitung an einen Armaturenflansch (19) - insbesondere Losflanschverbindung mit Vorschweißbunden - mit einem ersten Rohrstück (11), welches einen zylindrischen Rohrabschnitt (14) mit einem Ringbund (15) aufweist, der eine axial weisende Dichtfläche (22) und eine in Gegenrichtung weisende Flanschanlagefläche (19) aufweist, mit einem an der Flanschanlagefläche (19) anliegenden ersten Flansch (12) und mit einem zweiten Flansch (12) eines zweiten Rohrstücks (11) oder einer Armatur, wobei die Flansche (12, 29) mittels Flanschverschraubungen (13) gegeneinander und von außen gegen die Flanschanlagefläche (19) des Ringbundes (15) verspannbar sind, **dadurch gekennzeichnet, dass** das erste Rohrstück (11) im Bereich des Ringbundes (15) in seiner Innenwandung (23) einen in Umfangrichtung verlaufenden Radialschlitz (24) aufweist, in welchen das von der Rohrleitung geführte Medium eindringen kann und dass in der Rohrinnenwandung (23) auf der Umfangslinie des Radialschlitzes (24) wenigstens eine Radialbohrung (25) angeordnet ist.

2. Flanschverbindung nach Anspruch 1, **dadurch gekennzeichnet, dass** das erste Rohrstück (11) im Bereich des Ringbundes (15) zwischen der Radialebene (R) der Dichtfläche (22) und dem Radialschlitz (24) eine Dichtlippe (26) ausbildet, die aus der Radialebene (R) der Dichtfläche (22) ausgestellt ist.

3. Flanschverbindung nach Anspruch 2, **dadurch gekennzeichnet, dass** die Ausstellung der Dichtlippe (26) aus der Radialebene (R) der Dichtfläche (22) des Ringbundes (15) der Weite (W) des Radialschlitzes (24) entspricht.

4. Flanschverbindung nach Anspruch 2 oder 3, **dadurch gekennzeichnet, dass** die Dichtlippe (26) bei gegeneinander verspannten Flanschen (12, 29) in die Radialebene (R) der Dichtfläche (22) des Ringbundes (15) zurückgestellt und der Radialspalt (24) im Bereich der Innenumfangsfläche (23) des Rohstücks (11) weitestgehend geschlossen ist, das von der Rohrleitung geführte Medium jedoch über die Radialbohrung (25) in den Radialspalt (24) eindringen kann.

5. Flanschverbindung nach einem der vorhergehenden Ansprüche, **dadurch gekennzeichnet, dass** die Tiefe des Radialspaltes (24) in etwa der Stärke des benachbart des Ringbundes (15) befindlichen zylindrischen Rohrstücks (14) entspricht.

6. Flanschverbindung nach einem der vorangehenden Ansprüche, **dadurch gekennzeichnet, dass** die Tiefe der Radialbohrung (25) in etwa der Stärke des benachbart des Ringbundes (15) befindlichen zylindrischen Rohrstücks (14) entspricht.

7. Flanschverbindung nach einem der vorangehenden Ansprüche, **dadurch gekennzeichnet, dass** die Radialbohrung (25) gegenüber dem Radialspalt (24) eine geringere Tiefe aufweist.

## Claims

1. Flange joint (10) for connecting plastic pipes to one another or for connecting a plastic pipe to a fitting flange (19) - in particular lapped flange joint with short stub ends - with a first piece of pipe (11), which has a cylindrical pipe section (14) with an annular collar (15) which has an axially facing sealing surface (22) and a flange bearing surface (19) facing in the opposite direction, with a first flange (12) bearing against the flange bearing surface (19) and with a second flange (12) of a second piece of pipe (11) or of a fitting, the flanges (12, 29) being tensionable against each other by means of flange bolted connections (13) and from outside against the flange bearing surface (19) of the annular collar (15), **characterised in that** the first piece of pipe (11) has a radial slot (24) running in the circumferential direction in its inner wall (23) in the region of the annular collar (15), into which slot the medium conveyed by the pipe can penetrate, and **in that** at least one radial bore (25) is arranged in the pipe inner wall (23) on the circumferential line of the radial slot (24).

2. Flange joint according to Claim 1, **characterised in that** the first piece of pipe (11) forms a sealing lip (26) between the radial plane (R) of the sealing surface (22) and the radial slot (24) in the region of the annular collar (15), which lip projects from the radial plane (R) of the sealing surface (22).

3. Flange joint according to Claim 2, **characterised in that** the projection of the sealing lip (26) from the radial plane (R) of the sealing surface (22) of the annular collar (15) corresponds to the width (W) of the radial slot (24).

4. Flange joint according to Claim 2 or 3, **characterised in that** the sealing lip (26) is moved back into the radial plane (R) of the sealing surface (22) of the annular collar (15) when the flanges (12, 29) are tensioned against one another, and the radial gap (24) in the region of the inner circumferential surface (23) of the piece of pipe (11) is closed as far as possible, but the medium conveyed by the pipe can penetrate into the radial gap (24) via the radial bore (25).

5. Flange joint according to one of the preceding claims, **characterised in that** the depth of the radial gap (24) corresponds approximately to the thickness of the cylindrical piece of pipe (14) situated adjacent to the annular collar (15).

6. Flange joint according to one of the preceding claims, **characterised in that** the depth of the radial bore (25) corresponds approximately to the thickness of the cylindrical piece of pipe (14) situated adjacent to the annular collar (15).

7. Flange joint according to one of the preceding claims, **characterised in that** the radial bore (25) has a depth less than that of the radial gap (24).

## Revendications

1. Raccord à brides (10) pour tuyauteries en matière synthétique, entre elles ou pour attachement d'une tuyauterie en matière synthétique à une bride d'appareillage (19) - en particulier raccord à bride tournante avec collerettes à souder - avec une première pièce tubulaire (11), présentant un tronçon tubulaire (14) cylindrique avec une collerette annulaire (15), présentant une surface d'étanchéité (22) tournée axialement et une surface d'appui sur bride (19) tournée dans le sens inverse, avec une première bride (12), en appui sur la surface d'appui sur bride (19), et avec une deuxième bride (12), d'une deuxième pièce tubulaire (11) ou d'un appareillage, les brides (12, 29) étant susceptibles d'être serrées l'une contre l'autre à l'aide de raccords à brides, et depuis l'extérieur contre la surface d'appui sur bride (19) de la collerette annulaire (15), **caractérisé en ce que** la première pièce tubulaire (11) présente, dans la zone de la collerette annulaire (15), dans sa paroi intérieure (23), une fente radiale (24) s'étendant en direction périphérique, dans laquelle le fluide, guidé par la tuyauterie, peut pénétrer, et **en ce qu'**au moins un perçage radial (25) est disposé dans la paroi intérieure de tube (23), sur la ligne périphérique de la fente radiale (24).

2. Raccord à brides selon la revendication 1, **caractérisé en ce que** la première pièce tubulaire (11) constitue, dans la zone de la collerette annulaire (15), entre le plan radial (R) de la surface d'étanchéité (22) et la fente radiale (24), une lèvre d'étanchéité (26), dévoyée hors du plan radial (R) de la surface d'étanchéité (22).

3. Raccord à brides selon la revendication 2, **caractérisé en ce que** le dévoiement de la lèvre d'étanchéité (26) hors du plan radial (R) de la surface d'étanchéité (22) de la collerette annulaire (15) correspond à la largeur (W) de la fente radiale (24).

4. Raccord à brides selon la revendication 2 ou 3, **caractérisé en ce que**, lorsque les brides (12, 29) sont serrées l'une contre l'autre, la lèvre d'étanchéité (26) revient dans le plan radial (R) de la surface d'étanchéité (22) de la collerette annulaire (15) et l'intervalle radial (24), dans la zone de la surface périphérique intérieure (23) de la pièce tubulaire (11), est fermé au degré maximum, le fluide, guidé par la tuyauterie, pouvant cependant pénétrer dans l'intervalle radial (24) par le perçage radial (25).

5. Raccord à brides selon l'une des revendications précédentes, **caractérisé en ce que** la profondeur de l'intervalle radial (24) correspond à peu près à l'épaisseur de la pièce tubulaire (14) cylindrique, se trouvant au voisinage de la collerette annulaire (15).

6. Raccord à brides selon l'une des revendications précédentes, **caractérisé en ce que** la profondeur du perçage radial (25) correspond à peu près à l'épaisseur de la pièce tubulaire (14) cylindrique, se trouvant au voisinage de la collerette annulaire (15).

7. Raccord à brides selon l'une des revendications précédentes, **caractérisé en ce que** le perçage radial (25) présente une plus faible profondeur que l'intervalle radial (24).
